# EUROPEAN PATENT APPLICATION

(11) **EP 2 056 013 A1**
(43) Date of publication of application: **06.05.2009**
(21) Application number: 07119776.8
(22) Date of filing: 31.10.2007
(51) Int. Cl.: F17C 7/00

(54) **Unlimited supplying type partial gas pressure structure**

(71) Applicant: Yuan-Cheng, Chung, 307 Hsinchu County, Taiwan (CN)
(72) Inventor: Yuan-Cheng, Chung, 307 Hsinchu County, Taiwan (CN)
(74) Representative: Bucher, Ralf Christian

(57) **Abstract**

The present invention relates to a supplying type partial gas pressure structure, and more particularly to an unlimited supplying type partial gas pressure structure that contains a cylinder rack, whereas a multiple of supplying cylinders connected in series are installed on the cylinder rack; a transportation pipe with one end connected to the multiple supplying cylinders and the other end connected to a mixing processing cylinder and a converter in parallel; and another transportation pipe.

## Description

### FIELD OF THE INVENTION

The present invention relates to a supplying type partial gas pressure structure, and more particularly to an unlimited supplying type partial gas pressure structure.

### BACKGROUND OF THE INVENTION

It is known that many manufacturing processes require reliable sources of gas in order to meet the requirement of wide applications. Such kind of gas often is stored in steel cylinder or container before sending into the manufacturing process under controlled conditions. For example, many special purpose gases such as hydrogen phosphate, tri-hydrogen arsenate, or boron tri-phosphate are used during thin film deposition in the semiconductor industry. Due to the highly toxic and auto-combustion nature, said gases are all highly controversial in terms of safety and environment. In addition to toxicity, these gases mostly are compressed and liquefy for storage in cylinder in highly pressurized form. For convenience, someone generates said gas on site using electrochemical method. As generating said gas poses difficulty, there are many new technologies using low-pressure storage and transporting system to absorb such gas on solid as carrier. However, such storage and transporting system is not without its problem. Said system could encounter insufficient capacity and restriction in transportation, as well as poor heat conduction problem and is indeed a major drawback.

In view of this, in terms of the above problems of prior arts, this invention proposes a kind of unlimited replenishing type gas partial pressure structure in order to resolve these said drawbacks existing in the prior arts.

### SUMMARY OF THE INVENTION

The main purpose of this invention is to propose a kind of unlimited supply type partial gas pressure structure, wherein through the internal turbine absorption device it could be connected in parallel with the cylinder rack and the supplying cylinder; when the gas inside the supplying cylinder is exhausted the turbine absorption device can be used to suck in the air in the nature for the conversion action in order to achieve the function of saving energy which is very suitable for large volume production.

The main purpose of this invention is in providing a kind of unlimited supplying partial gas pressure structure, through a heat conversion device the heat generated by the pressure compartment at one end is released through the output of supplying cylinder to achieve thermal equilibrium in order to effectively reduce the temperature of the pressure compartment and attain the purpose of reducing temperature.

To achieve the above objects, this invention relate to a kind of gas supplying partial pressure structure, in particular about a kind of unlimited supplying partial gas pressure structure including a cylinder rack, a multiple of supplying cylinder is installed on the cylinder rack in series; a transporting pipe, a multiple of supplying cylinders is connected on one end and a mixing processing cylinder and a converter is connected on the other end in parallel; and another transportation pipe is connected from said mixing processing cylinder to the inside of said converter respectively; an output pipe with one end connected from the converter and the other end to output the gas from the converter to the top of the cylinder for the storage of the gas; a multiple of control output pipe to be connected to the first cylinder, said second cylinder, said third cylinder, said fourth cylinder, and said fifth cylinder; and a pressure compartment connected to the control output pipe at the bottom of the cylinders responsible for compressing the gas outputted from the control output pipe and convert and output, which is a simple structure with high stability.

Below is a detailed description of the embodiment through attached diagrams for better understanding of the object of this invention, the content and features of the technology, and the performance it attempts to achieve.

### BRIEF DESCRIPTION OF THE DRAWINGS

Figure 1 is the 3D illustration of the unlimited supplying type partial gas pressure structure of this invention.
Figure 2 is another preferred embodiment of the unlimitedsupplyingtypepartialgaspressurestructure of this invention.
Figure 3 is yet another preferred embodiment of the unlimitedsupplyingtypepartialgaspressurestructure of this invention.

### DETAILED DESCRIPTION OF THE PREFERRED EMBODIMENTS

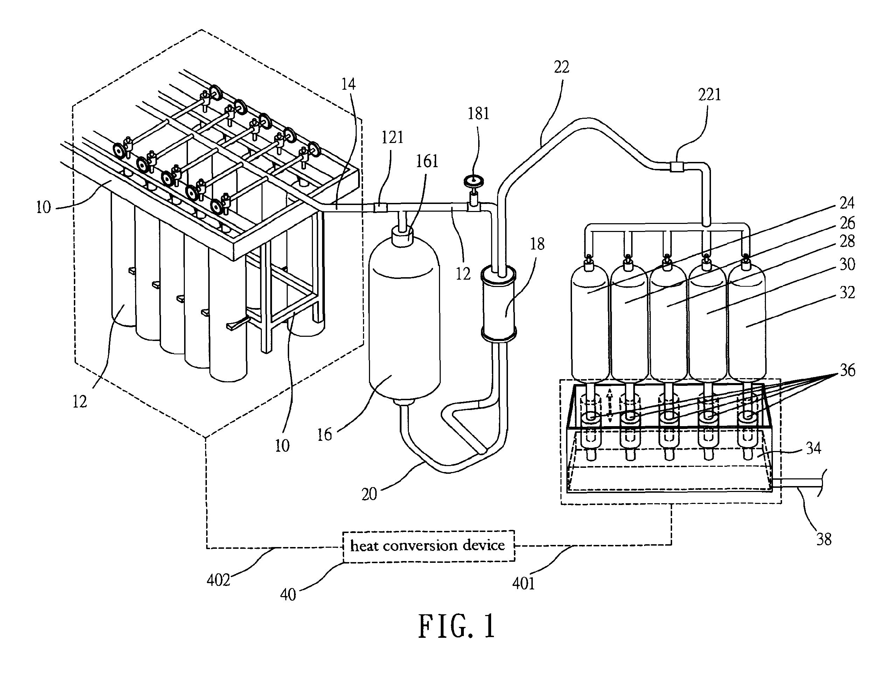

The structure and the technical means adopted by the present invention to achieve the above and other objects can be best understood by referring to the following detailed description of the preferred embodiments and the accompanying drawings, wherein Fig. 1 is a 3D view of an unlimited supply partial gas pressure structure. The drawing shows a cylinder rack 10, wherein a multiplicity of supplying cylinders 12 are connected in series and installed on said cylinder rack 10; a transporting pipe 14, wherein one end is connected to a multiplicity of supplying cylinders 12 and the other end is connected in parallel with a mixing processing cylinder 16 and a converter 18; from said mixing processing cylinder 16 another transportation pipe 20 is connected to the inside of said converter 18 respectively, and connected to the connection part of said transportation pipe 14 at said mixing processing cylinder 16, and further contains an automatic pressure reduction safety setup 161, and on said transportation pipe between said mixing processing cylinder 16 and supplying cylinder 12 further contains an installed pressure heat releaser 121, and between said mixing processing cylinder 16 and said converter 18 further contains a control switch 181; an output pipe 22, wherein one end is connected to said converter 18, the other end outputs the gas outputted from said converter 18 to the top of a first cylinder 24, a second cylinder 26, a third cylinder 28, a fourth cylinder 30, and a fifth cylinder 32, through controlled through the switch 221, and stores the gas to said first cylinder 24, said second cylinder 26, said third cylinder 28, said fourth cylinder 30, and said fifth cylinder 32; a multiplicity of control output pipe 36, installed at the bottom of said first cylinder 24, said second cylinder 26, said third cylinder 28, said fourth cylinder 30, and said fifth cylinder 32; and a pressure compartment 34, connected to said control output pipe 36 at the bottom of said first cylinder 24, said second cylinder 26, said third cylinder 28, said fourth cylinder 30 and said fifth cylinder 32, responsible for pressurizing the gas outputted from the control output pipe 36 so as to output from pipe 38; and a heat conversion device 40, wherein one end is installed at said pressure compartment 34 through transporting pipes 401 and 402 at one end, and the other end is connected to the supplying cylinder 12 nearby, for the high temperature generated when reactivating pressure compartment 34 to be released through sending gas out from cylinder to achieve the function of reducing temperature. The internal of said heat source conversion device 40 can be filled with natural water.

Again, a multiplicity of cylinders 24, 26, 28, 30, and 32 and said control output pipe 36 can be additionally installed to said output pipe 22 and connected to the pressure compartment 34, and can be extended in parallel to additional cylinders.

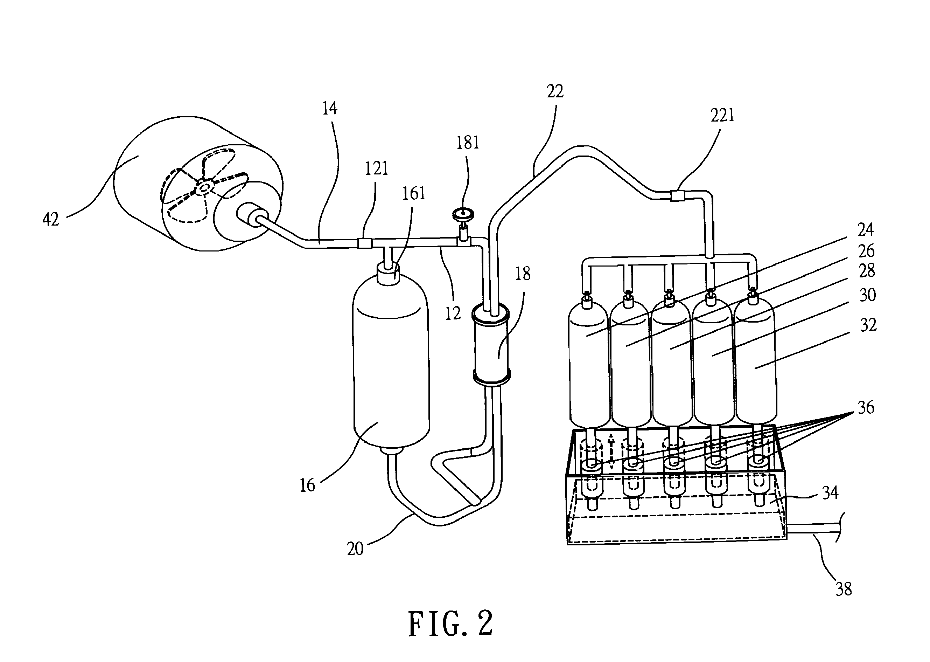

Fig. 2 is still another preferred embodiment of the unlimitedsupplyingtypepartialgaspressurestructure of this invention. As shown in the drawing, a turbine absorption device 42 can be used to replace the cylinder rack 10 and supplying cylinder 12 so that the turbine absorption device 42 can be used to suck in the air from the nature for separation process, which is unlimited in the resource;

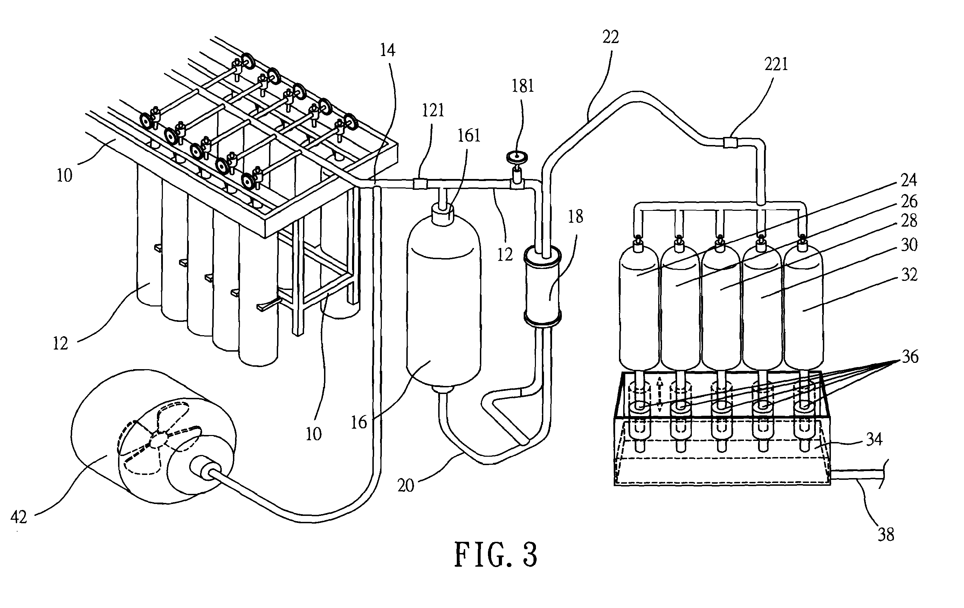

Fig. 3 shows yet another preferred embodiment of the unlimitedsupplyingtypepartialgaspressurestructure, wherein a turbine absorption device 42 can be connected in parallel with a cylinder rack 10 and a supplying cylinder 12 so that when the gas in the supplying cylinder 12 is exhausted the turbine absorption device 42 can be used to suck in the air from the nature for separation process, which unlimited in resource.

In summary, this invention has indeed achieved the intended performance through structural breakthrough of prior arts, which is not easy to ascertain by people mastering said arts. Furthermore, this invention has not been published prior to the patent application and its advancement and practicality can indeed meet the requirement of innovative patent application.

The embodiments stated above are for the description of the technical thoughts and features of this invention. The purpose is for the people mastering this art to understand the content of this invention for his implementation and is in no way restricted to the range of this patent. All equalization variation of modification based on the spirit revealed by this invention should still be covered within the range of the patent of this invention.

## Claims

1. An unlimited supplying type partial gas pressure structure containing at least:
a cylinder rack, wherein a multiplicity of supplying cylinders are installed in serial connection;
a transportation pipe, wherein one end is connected to multiplicity of supplying cylinders, the other end is connected to a mixing processing cylinder and a converter in parallel; and another transportation pipe originating from said mixing processing cylinder for connecting to the internal of said converter;
an output pipe, wherein one end is connected to said converter and the other end is to output the gas from the converted to the top of a first cylinder, a second cylinder, a third cylinder, a fourth cylinder, and a fifth cylinder and store the gas therein;
a multiplicity of control output pipes connecting to said first cylinder, said second cylinder, third cylinder, said fourth cylinder, and said fifth cylinder;
a pressure compartment, connecting to said control output pipe at the bottom of said first cylinder, said second cylinder, said third cylinder, said fourth cylinder, and said fifth cylinder, responsible for the compression of the gas from said control output pipe; and
a heat conversion device, wherein one end is installed in said pressure compartment, the other end is connected to nearby of the output of said cylinder, so that the high temperature pressure compartment could obtain the gas outputted from the cylinder in order to lower temperature.

2. The unlimited supplying type partial gas pressure structure as stated in claim 1, wherein a pressure heat reduction device is further installed at said transportation pipe between said mixing processing cylinder and said supplying cylinder.

3. The unlimited supplying type partial gas pressure structure as stated in claim 1, wherein an automatic pressure reduction safety device is further included at the connection of saidmixing processing cylinder and said transportation pipe.

4. The unlimited supplying type partial gas pressure structure as stated in claim 1, wherein a control switch is included between said mixing processing cylinder and said converter.

5. The unlimited supplying type partial gas pressure structure as stated in claim 1, wherein a control switch is included at said output pipe.

6. The unlimited supplying type partial gas pressure structure as stated in claim 1, wherein multiplicity of cylinders and said control output pipes can be further installed at said output pipe for connecting to said pressure compartment.

7. The unlimited supplying type partial gas pressure structure as stated in claim 1, wherein a turbine absorption device can be further installed to the transportation pipe connecting to said supplying cylinder.

8. The unlimited supplying type partial gas pressure structure as stated in claim 1, wherein said supplying cylinder and said cylinder rack can be directly replaced by a turbine absorption device.

9. The unlimited supplying type partial gas pressure structure as stated in claim 1, wherein the internal of said heat conversion device can be filled up with natural water.
